# EUROPÄISCHE PATENTSCHRIFT

(11) **EP 1 926 985 B1**
(45) Veröffentlichungstag und Bekanntmachung des Hinweises auf die Patenterteilung: **11.02.2015**
(21) Anmeldenummer: 06775749.2
(22) Anmeldetag: 25.07.2006
(51) Int. Cl.: G01J 3/28, G01J 3/44, G02B 21/00, G02B 21/16, G01N 21/64

(54) **VERFAHREN UND VORRICHTUNG ZUM HOCHAUFGELÖSTEN OPTISCHEN ABTASTEN EINER PROBE**
METHOD AND DEVICE FOR HIGH-RESOLUTION OPTICAL SCANNING OF A SPECIMEN
PROCEDE ET DISPOSITIF POUR LE BALAYAGE OPTIQUE A HAUTE RESOLUTION D'UN ECHANTILLON

(30) Priorität: 21.09.2005 DE 102005045164; 10.03.2006 DE 102006011556
(43) Veröffentlichungstag der Anmeldung: 04.06.2008
(73) Patentinhaber: Leica Microsystems CMS GmbH, 35578 Wetzlar (DE)
(72) Erfinder: GUGEL, Hilmar, 69221 Dossenheim (DE)
(74) Vertreter: Schaumburg, Thoenes, Thurn, Landskron, Eckert
(86) Internationale Anmeldenummer: PCT/DE2006/001294
(87) Internationale Veröffentlichungsnummer: WO 2007/033632

(56) Entgegenhaltungen:
- WO-A-2005/024482
- DE-A1- 4 416 558
- DE-A1- 10 313 138

## Beschreibung

Die Erfindung betrifft ein Verfahren zum hochaufgelösten optischen Abtasten einer Probe, vorzugsweise unter Verwendung eines Laser-Raster-Fluoreszenzmikroskops,
wobei die Probe eine Substanz umfasst, die in unterschiedliche Energiezustände - angeregter und abgeregter Zustand - versetzbar ist,
wobei die Probe zur bereichsweisen Erzeugung des angeregten Energiezustandes mit Licht einer Wellenlänge des Anregungsspektrums der Substanz beleuchtet wird,
wobei die Probe zur Erzeugung des abgeregten Zustandes in einem Fokusrandbereich der Anregung mit Licht einer geeigneten Abregungswellenlänge beleuchtet wird, und
wobei von der Probe ausgehendes Emissionslicht, das aus spontanem Zerfall verbliebener angeregter Energiezustände resultiert, mittels einer Detektionseinrichtung nachgewiesen wird.

Des Weiteren betrifft die Erfindung eine Vorrichtung zum hochaufgelösten optischen Abtasten einer Probe, wobei die Probe eine Substanz umfasst, die in unterschiedliche Energiezustände - angeregter und abgeregter Zustand - versetzbar ist, mit mindestens einer Lichtquelle zur Beleuchtung der Probe mit Licht einer Wellenlänge des Anregungsspektrums der Substanz zur bereichsweisen Erzeugung des angeregten Energiezustandes sowie zur Beleuchtung der Probe mit Licht einer geeigneten Abregungswellenlänge zur Erzeugung des abgeregten Zustandes in einem Fokusrandbereich der Anregung, und mit einer Detektionseinrichtung zum Nachweis des von der Probe ausgehenden Emissionslichts, das aus spontanem Zerfall verbliebener angeregter Energiezustände resultiert.

Verfahren und Vorrichtungen der hier in Rede stehenden Art sind seit einiger Zeit aus der Praxis bekannt und werden bspw. im Rahmen der STED-Mikroskopie eingesetzt. Mit den in Rede stehenden abbildenden optischen Verfahren und Vorrichtungen lassen sich räumliche Auflösungen jenseits der theoretischen Grenze erzielen, die gemäß dem Abbe'schen Gesetz durch die von der Wellenlänge des verwendeten Lichts abhängige Beugungsgrenze bestimmt wird.

Im Rahmen der STED-Mikroskopie wird dazu eine Substanz in der zu untersuchenden Probe bereitgestellt, die durch Licht in einen angeregten Zustand versetzbar ist und aus diesem angeregten Zustand schlagartig abgeregt werden kann. Bei der STED-Mikroskopie werden als derartige Substanzen ganz überwiegend Fluoreszenzfarbstoffe eingesetzt. Im Allgemeinen wird die Substanz zunächst mit kurzwelligem Licht, bspw. durch einen grünen Laserpuls, in den angeregten Zustand überführt. Sodann wird die Substanz in einem Fokusrandbereich der Anregung mittels eines langwelligen (bspw. roten) Laserpulses gezielt abgeregt. Um eine Abregung der Substanz ausschließlich im Fokusrandbereich zu erreichen, wird die Abregungs-Punktfunktion speziell geformt. Hierzu werden im Allgemeinen Phasenfilter eingesetzt, die sich im Strahlengang des langwelligen Laserstrahls befinden und die Wellenfront des Abregungslichtstrahls ortabhängig verändern. Entscheidend ist, dass der durch den Abregungslichtstrahl induzierte Übergang von dem angeregten in den abgeregten Zustand im Randbereich gesättigt, d.h. vollständig, stattfindet, so dass lediglich in einem (prinzipiell beliebig) kleinen zentralen Bereich die Substanz im angeregten Zustand verbleibt. Auf diese Weise wird mit dem Abregungslichtpuls eine Emission von Fluoreszenzlicht aus dem Randbereich des beugungsbegrenzten Anregungsflecks verhindert. Das detektierte Fluoreszenzlicht stammt somit aus einem eng definierten Probenbereich, dessen Durchmesser aufgrund der Sättigung der Abregung wesentlich kleiner sein kann als nach dem Abbe'schen Gesetz zulässig.

Die STED-Mikroskopie wird - ebenso wie alle anderen bekannten Verfahren, bei denen durch Sättigung eines abgeregten Zustands eine Auflösungserhöhung erzielt wird - im Einfarbenmodus betrieben. Das bedeutet, dass in der Probe nur eine Substanz, bspw. nur ein einzelner Fluoreszenzfarbstoff, bereitgestellt wird. In der Konfokalmikroskopie ist es demgegenüber üblich, mehrere unterschiedliche Fluoreszenzfarbstoffe in der Probe bereitzustellen und mehrfarbige Aufnahmen der Probe anzufertigen. Auf diese Weise ist es möglich, gleichzeitig unterschiedliche Prozesse in der Probe zu untersuchen. Mit Mehrfarbenaufnahmen im Rahmen der herkömmlichen Mikroskopie können demzufolge wesentlich mehr Informationen (wenngleich mit geringerer Auflösung) erlangt werden, als dies mit den bekannten räumlich hochaufgelösten Abbildungsverfahren bislang möglich ist.

Ein STED-Verfahren ist aus der DE 44 16 558 A1 bekannt.

Zum Stand der Technik wird ferner auf die DE 103 13 138 A1 verwiesen, in der die Verwendung mehrerer Stimulationslichtquellen vorgeschlagen wird, um STED-Strahlen für mehrere Farbstoffe zur erzeugen. Schließlich ist in der WO 2005/024482 A1 eine mit einem mikrostrukturierten optischen Element ausgestattete Lichtquelle beschrieben, die in einem Mehrwellenlängen-STED-Verfahren einsetzbar ist.

Der vorliegenden Erfindung liegt nunmehr die Aufgabe zugrunde, ein Verfahren sowie eine Vorrichtung der eingangs genannten Art anzugeben, wonach mit konstruktiv einfachen und kostengünstigen Mitteln eine hohe räumliche Auflösung jenseits der Beugungsgrenze bei gleichzeitig hoher Informationsausbeute realisiert ist.

Erfindungsgemäß ist die voranstehende Aufgabe durch ein Verfahren mit den Merkmalen des Patentanspruchs 1 und eine Vorrichtung mit den Merkmalen des Patentanspruchs 10 gelöst.

In erfindungsgemäßer Weise ist zunächst erkannt worden, dass sich die beim hochaufgelösten optischen Abtasten einer Probe ergebenden Informationen erhöht werden können, indem eine mehrfarbige Aufnahme der Probe angefertigt wird. In erfindungsgemäßer Weise wird dazu wenigstens eine weitere Substanz in der Probe bereitgestellt, die in einen angeregten Energiezustand und in einen abgeregten Zustand überführbar ist, wobei sich Anregungsspektrum und Abregungswellenlänge von denen der ersten Substanz unterscheiden. Trotz der unterschiedlichen Spektren werden sich die Spektren der in der Probe vorhandenen Substanzen jedoch im Allgemeinen zumindest teilweise überlagern. Problematisch ist dabei vor allem die insbesondere für Fluoreszenzfarbstoffe typische große Ausdehnung des Anregungsspektrums in den kurzwelligen Bereich. In diesem Zusammenhang ist erkannt worden, dass eine simultane Anregung und eine simultane Abregung mehrerer Substanzen dazu führen kann, dass Abregungslicht der einen Substanz zu einer Anregung einer anderen Substanz führen kann. Aufgrund der hohen Leistung, mit der das Abregungslicht zur Erzeugung eines gesättigten Übergangs in den abgeregten Zustand eingestrahlt werden muss, wird eine durch eine Abregungswellenlänge angeregte Substanz sehr schnell gebleicht und steht demzufolge für eine Aufnahme nicht mehr zur Verfügung. Zur Umgehung dieses Problems werden in erfindungsgemäßer Weise beim Abtasten der Probe die Schritte der Anregung und/oder der gesättigten Abregung und/oder der Detektion für die einzelnen Substanzen zeitlich voneinander getrennt durchgeführt.

Es sei an dieser Stelle ganz besonders hervorgehoben, dass im Rahmen der vorliegenden Erfindung der Begriff "Abregungswellenlänge" nicht eng zu verstehen ist und die Erfindung keineswegs auf die stimulierte Emission beschränkt ist. Vielmehr bezieht sich die Erfindung auf alle Verfahren, bei denen eine Auflösungserhöhung durch Sättigung eines reversiblen Molekülübergangs erzeugt wird. Hierzu zählt bspw. auch der Einsatz photoschaltbarer bzw. photokonvertierbarer Proteine, die durch Einstrahlen von Licht bestimmter Wellenlängen zwischen fluoreszierenden und nicht fluoreszierenden Zuständen umgeschaltet werden können. Das An- und Ausschalten der Fluoreszenz wird dabei vorzugsweise durch unterschiedliche Wellenlängenbänder bewirkt, so dass durch Sättigen des ausgeschalteten Zustands eine Auflösungserhöhung erzielt werden kann. Neben einem Einsatz der Erfindung in der STED-Mikroskopie, kann die Erfindung zudem in der STED-4Pi-Mikroskopie, der Up-Conversion-Mikroskopie sowie im Rahmen der Ground-State-Depletion (GSD) eingesetzt werden.

Im Rahmen einer konkreten Ausführungsform ist vorgesehen, dass die zeitliche Abfolge der Schritte der Anregung und/oder der Abregung und/oder der Detektion entsprechend der Größe der jeweiligen Abregungswellenlängen der Substanzen festgelegt wird. In besonders vorteilhafter Weise wird bei jedem Rasterschritt jeweils mit der Substanz mit der größten Abregungswellenlänge begonnen. Diese Vorgehensweise hat den Vorteil, dass das von der Substanz ausgehende Emissionslicht ohne Beeinflussung durch eine andere Substanz detektiert werden kann. Eine zeitlich vor der Detektion des Emissionslichts stattfindende Anregung der Substanz durch Abregungslicht einer anderen Substanz ist dementsprechend vermieden.

In vorteilhafter Weise handelt es sich bei dem angeregten Energiezustand um einen fluoreszenzfähigen Zustand. Fluoreszenzlicht ist im Hinblick auf die Detektion sehr gut handhabbar und es steht eine Vielzahl unterschiedlicher Substanzen zur Verfügung, mit denen die Probe markiert werden kann. Aufgrund der geringen Quantenausbeute der Fluoreszenz kann es unter Umständen von Vorteil sein, mehrere Anregungs-, Abregungs- und/oder Detektionszyklen durchzuführen, d.h. dass die Schritte der Anregung und/oder der (gesättigten) Abregung und/oder der Detektion von Emissionslicht für eine Substanz mehrmals hintereinander durchgeführt werden, bevor zur nächsten Substanz übergegangen wird.

Eine sequentielle Aufnahme der einzelnen Substanzen wird erfindungsgemäß, bildweise oder sogar stapelweise vorgenommen. Bei einer bildweisen Aufnahme wird ein zu untersuchender Probenbereich zunächst vollständig abgerastert, wobei nur eine erste Substanz in der beschriebenen Weise untersucht wird. Bei einem nachfolgenden vollständigen Abrastern des zu untersuchenden Probenbereichs wird ausschließlich eine andere Substanz untersucht, etc.

In einer konkreten Ausführungsform kann vorgesehen sein, dass die Detektionseinrichtung zum Nachweis des von der Probe ausgehenden Emissionslichts einen Detektor mit einem wellenlängenabhängigen Element umfasst. Das wellenlängenabhängige Element kann bspw. als Filter ausgeführt sein. Die Detektionseinrichtung kann auch mehre Detektoren umfassen, wobei in besonders vorteilhafter Weise einer Substanz jeweils eine oder mehrere Detektoren der Detektionseinrichtung zuordenbar sind.

In weiter vorteilhafter Weise sind die Detektoren der Detektionseinrichtung einzeln und/oder gruppenweise abschaltbar. Auf diese Weise kann die Detektion von Emissionslicht einer Substanz verhindert werden, das aus einer Anregung der Substanz mit Licht einer Abregungswellenlänge einer anderen Substanz resultiert. Die Abschaltung kann für die Dauer der Bestrahlung mit der Abregungswellenlänge vorgesehen sein. Alternativ oder zusätzlich kann die Detektion durch Vorschalten von Sperrfiltern und/oder Blenden vermieden werden.

Im Hinblick auf eine besonders hohe Effizienz ist vorgesehen, dass das zur Erzeugung des abgeregten Zustands einer Substanz eingestrahlte Licht gleichzeitig zur Erzeugung des angeregten Zustands einer anderen Substanz verwendet wird. Dabei werden zur Erzeugung des abgeregten Zustands vorzugsweise Lichtpulse mit einer Pulsbreite im Bereich von 100 ps oder länger verwendet. Auf diese Weise wird die Photoschädlichkeit des Abregungspulses so gering wie möglich gehalten.

Im Hinblick auf eine besonders umfassende Vermeidung von gegenseitigen Beeinflussungen der einzelnen Substanzen untereinander können die Substanzen und die Abregungswellenlängen in besonders vorteilhafter Weise derart ausgewählt werden, dass die Abregungswellenlängen der Substanzen jeweils außerhalb der Anregungsspektren der jeweils übrigen Substanzen liegen.

Im Hinblick auf eine hohe Flexibilität sowie eine hohe Benutzerfreundlichkeit kann vorgesehen sein, dass die Anregungs- und Abregungswellenlängen für jede Substanz frei gewählt werden können. Dies ermöglicht eine optimale Anregung und stimulierte Abregung der Substanzen. In besonders bevorzugter Weise wird ein Software-Interface zur Verfügung gestellt, über das ein Benutzer die Anregungs- und Abregungswellenlängen auswählen kann. Die Wellenlängen können bspw. benutzerseitig eingegeben bzw. frei eingestellt werden. Alternativ oder zusätzlich ist es möglich, einem Benutzer eine Tabelle zur Verfügung zu stellen, aus der Anregungs- und/oder Abregungswellenlängen ausgewählt werden können.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels des erfindungsgemäßen Verfahrens zum hochaufgelösten optischen Abtasten einer Probe zu verweisen. In Verbindung mit der Erläuterung des bevorzugten Ausführungsbeispiels des erfindungsgemäßen Verfahrens anhand der Zeichnung werden auch im Allgemeinen bevorzugte Ausgestaltungen und Weiterbildungen der Lehre erläutert. In der Zeichnung zeigen
- Fig. 1: eine spektrale Verteilung eines Anregungs- und eines Emissionsspektrums eines Fluoreszenzfarbstoffs und
- Fig. 2: die Spektren zweier Fluoreszenzfarbstoffe, wie sie gemäß einem Ausführungsbeispiel des erfindungsgemäßen Verfahrens zum Einsatz kommen.

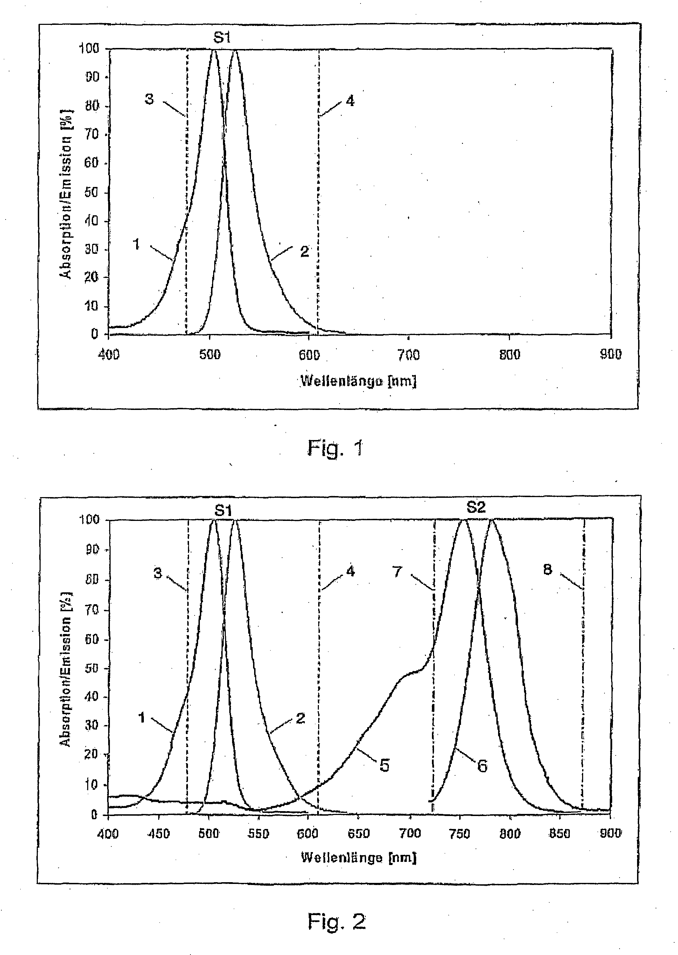

Fig. 1 zeigt die spektrale Verteilung eines Anregungsspektrums 1 und eines Emissionsspektrums 2 einer Substanz S1, wobei es sich hier konkret um einen Fluoreszenzfarbstoff handelt. Der Einsatz von Fluoreszenzfarbstoffen mit der gezeigten spektralen Verteilung wird entsprechend dem bekannten Stand der Technik typischerweise in der Einfarben-STED-Mikroskopie eingesetzt. Dabei wird eine zu untersuchende Probe mit einem kurzwelligen Laserpuls der Anregungswellenlänge 3 beleuchtet, wobei der Puls vorzugsweise aus einer gepulsten Laserdiode stammt. Anschließend wird eine Abregung der Fluoreszenzmoleküle am Anregungsfokusrand herbeigeführt, indem ein langwelliger Laserpuls mit der Abregungswellenlänge 4 eingestrahlt wird. Um eine Abregung der Fluoreszenzmoleküle ausschließlich am Fokusrand zu erreichen, wird die Abregungs-Punktbildfunktion speziell geformt, indem im Strahlengang des langwelligen Laserstrahls Phasenfilter eingesetzt werden, welche die Wellenfront des Abregungsstrahls ortsabhängig verändern. Die Abregung der Fluoreszenzmoleküle wird gesättigt durchgeführt, so dass nur noch in einem sehr kleinen zentralen Bereich Fluoreszenzmoleküle im angeregten Zustand verbleiben. Das aus einem spontanen Zerfall dieser verbliebenen angeregten Zustände resultierende Emissionslicht wird schließlich mit hoher Ortsauflösung detektiert.

Fig. 2 zeigt die Spektren zweier Fluoreszenzfarbstoffe S1, S2, wie sie in einem Ausführungsbeispiel des erfindungsgemäßen Verfahrens eingesetzt werden. Im linken Teil, d.h. bei kurzen Wellenlängen, liegen die Spektren 1, 2 des bereits in Fig. 1 dargestellten Fluoreszenzfarbstoffs S1. Im rechten Teil des Diagramms, d.h. zu längeren Wellenlängen hin verschoben, liegen das Anregungsspektrum 5 und das Emissionsspektrum 6 eines zusätzlich in eine zu untersuchende Probe eingebrachten Fluoreszenzfarbstoffs S2. Typisch für Fluoreszenzfarbstoffe ist die große Ausdehnung des Anregungsspektrums 5 in den kurzwelligen Bereich. Die meisten Farbstoffe lassen sich demzufolge mit blauem Licht anregen. Zur stimulierten Emission von Fluoreszenzfarbstoffen wird Laserlicht verwendet, das im Allgemeinen eine ca. 100 bis 1000 mal größere Leistung besitzt als das Anregungslicht. Bei simultaner Anregung und simultaner stimulierter Abregung der beiden Farbstoffe S1, S2 führt die Einstrahlung von Licht mit der Abregungswellenlänge 4 neben einer stimulierten Abregung des Farbstoffs S1 auch zu einer Anregung des Farbstoffs S2. Aufgrund der hohen Leistung des mit der Wellenlänge 4 eingestrahlten Lichts wird der Farbstoff S2 sehr schnell gebleicht und steht dementsprechend für eine Bildaufnahme nicht mehr zur Verfügung.

Erfindungsgemäß werden daher beim Abtasten der Probe die Schritte der Anregung und/oder der gesättigten Abregung und/oder der Detektion für die einzelnen Fluoreszenzfarbstoffe S1, S2 zeitlich voneinander getrennt durchgeführt. In dem dargestellten Ausführungsbeispiel wird zuerst der Farbstoff S2 mit der langwelligsten Abregungswellenlänge 8 angeregt (mit Licht der Anregungswellenlänge 7) und stimuliert abgeregt (mit Licht der Abregungswellenlänge 8). Das Fluoreszenzlicht (mit dem Emissionsspektrum 6) wird mittels eines Detektors registriert. Anschließend wird der Farbstoff S1 mit kürzerer Abregungswellenlänge 4 angeregt (mit Licht der Anregungswellenlänge 3), stimuliert abgeregt (mit Licht der Abregungswellenlänge 4) und das Fluoreszenzlicht dieses Farbstoffs S1 detektiert.

Um eine Detektion von Fluoreszenzlicht des Farbstoffs S2 zu verhindern, das bei Bestrahlung mit Licht der Wellenlänge 4 entsteht, wird ein zum Nachweis von Emissionslicht eingesetzter Detektor, der für Licht dieser Wellenlänge sensitiv ist, für die Zeit der Bestrahlung mit der Wellenlänge 4 abgeschaltet. Alternativ kann ein Sperrfilter oder eine Blende vor dem entsprechenden Detektor angeordnet werden. Insgesamt ist damit sichergestellt, dass durch Abregungslicht eines Farbstoffs nicht ein anderer Farbstoff angeregt und/oder gebleicht wird, bevor dieser aufgenommen worden ist.

Für den Fall, dass die Anregungseffizienz des Farbstoffs S2 bei der Wellenlänge 4 so gering ist, dass er nur angeregt wird, aber kein - oder nur geringes - Bleichen auftritt, kann der Puls der Wellenlänge 4 gleichzeitig zum Abregen des Farbstoffs S1 und zum Anregen des Farbstoffs S2 verwendet werden. Hierzu wird eine Synchronisation des Pulses bei der Wellenlänge 4 mit dem Abregungspuls des Farbstoffs S2 vorgenommen. Ein weiterer Anregungspuls für den Farbstoff S2 ist damit nicht nötig.

Hinsichtlich weiter vorteilhafter Ausgestaltungen des erfindungsgemäßen Verfahrens und der erfindungsgemäßen Vorrichtung sei zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Verfahren zum hochaufgelösten optischen Abtasten einer Probe, vorzugsweise unter Verwendung eines Laser-Raster-Fluoreszenzmikroskops,
wobei die Probe eine Substanz (S1) umfasst, die in unterschiedliche Energiezustände - angeregter und abgeregter Zustand - versetzbar ist,
wobei die Probe zur bereichsweisen Erzeugung des angeregten Energiezustandes mit Licht einer Wellenlänge (3) des Anregungsspektrums (1) der Substanz (S1) beleuchtet wird,
wobei die Probe zur Erzeugung des abgeregten Zustandes in einem Fokusrandbereich der Anregung mit Licht einer geeigneten Abregungswellenlänge (4) beleuchtet wird, und
wobei von der Probe ausgehendes Emissionslicht, das aus spontanem Zerfall verbliebener angeregter Energiezustände resultiert, mittels einer Detektionseinrichtung nachgewiesen wird,
wobei die Probe mindestens eine weitere Substanz (S2) umfasst, die in einen angeregten Energiezustand und in einen abgeregten Zustand überführbar ist, wobei sich Anregungsspektrum (5) und Abregungswellenlänge (8) von denen der ersten Substanz (S1) unterscheiden, wobei beim Abtasten der Probe die Schritte der Anregung und/oder der Abregung und/oder der Detektion für die einzelnen Substanzen (S1, S2) zeitlich voneinander getrennt durchgeführt werden, wobei die zeitliche Abfolge entsprechend der Größe der jeweiligen Abregungswellenlängen (4, 8) der Substanzen (S1, S2) derart festgelegt wird, dass bei jedem Rasterschritt jeweils mit der Substanz (S2) mit der größten Abregungswellenlänge (8) begonnen wird, wobei eine sequentielle Aufnahme der einzelnen Substanzen (S1, S2) bildweise oder stapelweise vorgenommen wird, und wobei während der Beleuchtung der Probe mit einer Abregungswellenlänge (4) einer Substanz (S1) die Detektion von Emissionslicht einer anderen Substanz (S2), deren Anregungsspektrum (5) die eingestrahlte Abregungswellenlänge (4) umfasst, unterdrückt wird.

2. Verfahren nach Anspruch 1, **dadurch gekennzeichnet, dass** es sich bei dem angeregten Energiezustand um einen fluoreszenzfähigen Zustand handelt.

3. Verfahren nach Anspruch 1 oder 2, **dadurch gekennzeichnet, dass** die Schritte der Anregung und/oder der Abregung und/oder der Detektion für eine Substanz (S1, S2) mehrmals hintereinander durchgeführt werden.

4. Verfahren nach einem der Ansprüche 1 bis 3, **dadurch gekennzeichnet, dass** für jede Substanz (S1 , S2) ein eigener Detektor verwendet wird.

5. Verfahren nach einem der Ansprüche 1 bis 3, **dadurch gekennzeichnet, dass** für alle Substanzen (S1 , S2) derselbe Detektor verwendet wird,

6. Verfahren nach der Anspruch 5, **dadurch gekennzeichnet, dass** dem Detektor ein wellenlängenabhängiges Element, insbesondere in Form eines Filters, vorgeschaltet wird.

7. Verfahren nach einem der Ansprüche 1 bis 6, **dadurch gekennzeichnet, dass** eine Unterdrückung der Detektion durch Abschalten des entsprechenden Detektors und/oder durch Vorschalten eines Sperrfilters oder einer Blende realisiert wird.

8. Verfahren nach einem der Ansprüche 1 bis 7, **dadurch gekennzeichnet, dass** das zur Erzeugung des abgeregten Zustandes einer Substanz (S1) eingestrahlte Licht gleichzeitig zur Erzeugung des angeregten Zustandes einer anderen Substanz (S2) verwendet wird.

9. Verfahren nach einem der Ansprüche 1 bis 7, **dadurch gekennzeichnet, dass** die Probe zur Erzeugung des abgeregten Zustandes einer Substanz (S1, S2) mit Lichtimpulsen mit einer Pulsbreite im Bereich von 100 ps oder länger beleuchtet wird.

10. Vorrichtung zum hochaufgelösten optischen Abtasten einer Probe, insbesondere zur Durchführung eines Verfahrens nach einem der Ansprüche 1 bis 9, wobei die Probe eine Substanz (S1) umfasst, die in unterschiedliche Energiezustände - angeregter und abgeregter Zustand - versetzbar ist, mit mindestens einer Lichtquelle zur Beleuchtung der Probe mit Licht einer Wellenlänge (3) des Anregungsspektrums (1) der Substanz (S1) zur bereichsweisen Erzeugung des angeregten Energiezustandes sowie zur Beleuchtung der Probe mit Licht einer geeigneten Abregungswellenlänge (4) zur Erzeugung des abgeregten Zustandes in einem Fokusrandbereich der Anregung, und mit einer Detektionseinrichtung zum Nachweis des von der Probe ausgehenden Emissionslichts, das aus spontanem Zerfall verbliebener angeregter Energiezustände resultiert,
wobei die Probe mindestens eine weitere Substanz (S2) umfasst, die in einen angeregten Energiezustand und in einen abgeregten Zustand überführbar ist, wobei sich Anregungsspektrum (5) und Abregungswellenlänge (8) von denen der ersten Substanz (S1) unterscheiden, wobei beim Abtasten der Probe die Schritte der Anregung und/oder der Abregung und/oder der Detektion für die einzelnen Substanzen (S1, S2) zeitlich voneinander getrennt durchführbar sind, wobei die zeitliche Abfolge entsprechend der Größe der jeweiligen Abregungswellenlängen (4, 8) der Substanzen (S1, S2) derart festgelegt wird, dass bei jedem Rasterschritt jeweils mit der Substanz (S2) mit der größten Abregungswellenlänge (8) begonnen wird, wobei eine sequentielle Aufnahme der einzelnen Substanzen (S1, S2) bildweise oder stapelweise vorgenommen wird, und wobei während der Beleuchtung der Probe mit einer Abregungswellenlänge (4) einer Substanz (S1) die Detektion von Emissionslicht einer anderen Substanz (S2), deren Anregungsspektrum (5) die eingestrahlte Abregungswellenlänge (4) umfasst, unterdrückt wird.

11. Vorrichtung nach Anspruch 10, **dadurch gekennzeichnet, dass** die Detektionseinrichtung einen Detektor mit einem wellenlängenabhängigen Element, vorzugsweise einem Filter, umfasst.

12. Vorrichtung nach Anspruch 10 oder 11, **dadurch gekennzeichnet, dass** die Detektionseinrichtung mehrere Detektoren umfasst.

13. Vorrichtung nach Anspruch 11 oder 12, **dadurch gekennzeichnet, dass** einer Substanz (S1, S2) jeweils ein oder mehrere Detektoren der Detektionseinrichtung zuordenbar sind.

14. Vorrichtung nach einem der Ansprüche 11 bis 13, **dadurch gekennzeichnet, dass** die Detektoren der Detektionseinrichtung einzeln und/oder gruppenweise abschaltbar sind.

15. Vorrichtung nach einem der Ansprüche 11 bis 14, **dadurch gekennzeichnet, dass** den Detektoren der Detektionseinrichtung einzeln und/oder gruppenweise Sperrfilter und/oder Blenden vorschaltbar sind.

16. Vorrichtung nach einem der Ansprüche 10 bis 15, **dadurch gekennzeichnet, dass** die Lichtquelle als Laserdiode ausgeführt ist.

17. Vorrichtung nach einem der Ansprüche 10 bis 16, **dadurch gekennzeichnet, dass** die Lichtquelle im Pulsbetrieb arbeitet.

18. Vorrichtung nach einem der Ansprüche 10 bis 17, **dadurch gekennzeichnet, dass** die Anregungswellenlängen (3, 7) und/oder die Abregungswellenlängen (4, 8) frei auswählbar sind.

19. Vorrichtung nach Anspruch 18, **gekennzeichnet durch** ein Software-Interface zur Auswahl der Anregungswellenlängen (3, 7) und/oder der Abregungswellenlängen (4, 8).

## Claims

1. A method for high-resolution optical scanning of a specimen, preferably by using a laser scanning fluorescence microscope,
wherein the specimen comprises a substance (S1), which can be put in different energy states - excited state and deexcited state,
wherein the specimen is illuminated with light of a wavelength (3) of the excitation spectrum (1) of the substance (S1) for the generation by region of the excited energy state,
wherein the specimen is illuminated with light of a suitable deexcitation wavelength (4) in a focus edge region of the excitation for the generation of the deexcited state, and
wherein emission light emitted by the specimen, which results from spontaneous disintegration of remaining excited energy states, is detected by means of a detection device,
wherein the specimen comprises at least one further substance (S2), which can be put in an excited energy state and a deexcited state, wherein excitation spectrum (5) and deexcitation wavelength (8) differ from that of the first substance (S1), wherein during scanning of the specimen the steps of excitation and/or deexcitation and/or detection for the individual substances (S1, S2) are executed at separate times, wherein the time sequence is determined in accordance with the size of the respective deexcitation wavelengths (4, 8) of the substances (S1, S2) such that in each scanning step it is started respectively with the substance (S2) with the longest deexcitation wavelength (8), wherein a sequential acquisition of the individual substances (S1, S2) is carried out by image or in batches, and wherein during the illumination of the specimen with an excitation wavelength (4) of a substance (S1) the detection of emission light of another substance (S2), the excitation spectrum (5) of which comprises the irradiated deexcitation wavelength (4), is suppressed.

2. The method according to claim 1, **characterized in that** the excited energy state is a state being able to fluoresce.

3. The method according to claim 1 or 2, **characterized in that** the steps of excitation and/or deexcitation and/or detection for a substance (S1, S2) are performed several times in succession.

4. The method according to one of the claims 1 to 3, **characterized in that** for each substance (S1, S2) a separate detector is used.

5. The method according to one of the claims 1 to 3, **characterized in that** for all substances (S1, S2) the same detector is used.

6. The method according to claim 5, **characterized in that** a wavelength-dependent element, in particular in the form of a filter, is positioned upstream of the detector.

7. The method according to one of the claims 1 to 6, **characterized in that** a suppression of the detection is realized by means of switching off the respective detector and/or by means of positioning a blocking filter or an aperture upstream.

8. The method according to one of the claims 1 to 7, **characterized in that** the light irradiated for the generation of the deexcited state of a substance (S1) is simultaneously used for the generation of the excited state of another substance (S2).

9. The method according to one of the claims 1 to 7, **characterized in that** the specimen for the generation of the deexcited state of a substance (S1, S2) is illuminated with light pulses with a pulse width in the range of 100 ps or longer.

10. A device for high-resolution optical scanning of a specimen, in particular for the execution of a method according to one of the claims 1 to 9, wherein the specimen comprises a substance (S1) which can be put in different energy states - excited state and deexcited state, comprising at least one light source for illuminating the specimen with light of a wavelength (3) of the excitation spectrum (1) of the substance (S1) for the generation by region of the excited energy state as well as for the illumination of the specimen with light of a suitable deexcitation wavelength (4) for the generation of the deexcited state in a focus edge region of the excitation, and comprising a detection device for the detection of the emission light emitted by the specimen, which results from spontaneous disintegration of remaining excited energy states,
wherein the specimen comprises at least one further substance (S2), which can be put in an excited energy state and a deexcited state, wherein excitation spectrum (5) and deexcitation wavelength (8) differ from that of the first substance (S1), wherein during scanning of the specimen the steps of excitation and/or deexcitation and/or detection for the individual substances (S1, S2) are executable at separate times, wherein the time sequence is determined in accordance with the size of the respective deexcitation wavelengths (4, 8) of the substances (S1, S2) such that in each scanning step it is started respectively with the substance (S2) with the longest deexcitation wavelength (8), wherein a sequential acquisition of the individual substances (S1, S2) is carried out by image or in batches, and wherein during the illumination of the specimen with an excitation wavelength (4) of a substance (S1) the detection of emission light of another substance (S2), the excitation spectrum (5) of which comprises the irradiated deexcitation wavelength (4), is suppressed.

11. The device according to claim 10, **characterized in that** the detection device comprises a detector with a wavelength-dependent element, preferably a filter.

12. The device according to claim 10 or 11, **characterized in that** the detection device comprises a plurality of detectors.

13. The device according to claim 11 or 12, **characterized in that** respectively one or a plurality of detectors of the detection device are assignable to a substance (S1, S2).

14. The device according to one of the claims 11 to 13, **characterized in that** the detectors of the detection device can be switched off separately and/or in groups.

15. The device according to one of the claims 11 to 14, **characterized in that** blocking filters and/or apertures are positioned upstream of the detectors of the detection device.

16. The device according to one of the claims 10 to 15, **characterized in that** the light source is realized as laser diode.

17. The device according to one of the claims 10 to 16, **characterized in that** the light source operates in pulse mode.

18. The device according to one of the claims 10 to 17, **characterized in that** the excitation wavelengths (3, 7) and/or the deexcitation wavelengths (4, 8) are freely selectable.

19. The device according to claim 18, **characterized by** a software interface for the selection of the excitation wavelengths (3, 7) and/or the deexcitation wavelengths (4, 8).

## Revendications

1. Procédé pour le balayage optique à haute résolution d'un échantillon, de préférence au moyen d'un microscope à fluorescence à balayage laser,
l'échantillon comprenant une substance (S1) pouvant être amenée dans différents états d'énergie, état excité et état désexcité,
l'échantillon étant éclairé par une lumière d'une longueur d'onde (3) du spectre d'excitation (1) de la substance (S1) afin de générer par endroits l'état d'énergie excité,
l'échantillon étant éclairé par une lumière d' une longueur d'onde de désexcitation (4) appropriée dans une zone marginale focale de l'excitation afin de générer l'état désexcité, et
la lumière émise par l'échantillon et résultant de la désintégration spontanée d'états d'énergie excités restants étant mise en évidence au moyen d'un dispositif de détection,
l'échantillon comprenant au moins une autre substance (S2) pouvant être amenée dans un état d'énergie excité et dans un état d'énergie désexcité, le spectre d'excitation (5) et la longueur d'onde de désexcitation (8) différant de ceux de la première substance (S1), les étapes d'excitation et/ou de désexcitation et/ou de détection des différentes substances (S1, S2) étant exécutées séparément dans le temps lors du balayage de l'échantillon, la chronologie étant fixée en fonction de la taille des longueurs d'onde de désexcitation (4, 8) respectives des substances (S1, S2), de telle manière que pour chaque étape de balayage, on démarre respectivement avec la substance (S2) présentant la plus grande longueur d'onde de désexcitation (8), une acquisition séquentielle des différentes substances (S1, S2) étant réalisée image par image ou par lots, et, pendant l'éclairage de l'échantillon avec une longueur d'onde de désexcitation (4) d'une substance (S1), la détection d'une lumière émise par une autre substance (S2), dont le spectre d'excitation (5) comprend la longueur d'onde de désexcitation (4) irradiée, étant supprimée.

2. Procédé selon la revendication 1, **caractérisé en ce que** l'état d'énergie excité est un état pouvant émettre une fluorescence.

3. Procédé selon la revendication 1 ou 2, **caractérisé en ce que** les étapes de l'excitation et/ou de la désexcitation et/ou de la détection pour une substance (S1, S2) sont réalisées les unes à la suite des autres et à plusieurs reprises.

4. Procédé selon l'une quelconque des revendications 1 à 3, **caractérisé en ce qu'**un détecteur séparé est utilisé pour chaque substance (S1, S2).

5. Procédé selon l'une quelconque des revendications 1 à 3, **caractérisé en ce que** le même détecteur est utilisé pour toutes les substances (S1, S2).

6. Procédé selon la revendication 5, **caractérisé en ce qu'**un élément dépendant de la longueur d'onde, en particulier sous forme d'un filtre, est monté en amont du détecteur.

7. Procédé selon l'une quelconque des revendications 1 à 6, **caractérisé en ce qu'**une suppression de la détection est réalisée par une mise à l'arrêt du détecteur correspondant et/ou par un montage en amont d'un filtre d'arrêt ou d'un obturateur.

8. Procédé selon l'une quelconque des revendications 1 à 7, **caractérisé en ce que**, pour générer l'état désexcité d'une substance (S1), la lumière irradiée est utilisée simultanément pour générer l'état excité d'une autre substance (S2).

9. Procédé selon l'une quelconque des revendications 1 à 7, **caractérisé en ce que** l'échantillon, pour générer l'état désexcité d'une substance (S1, S2), est éclairé avec des impulsions lumineuses d'une largeur d'impulsion dans la plage supérieure ou égale à 100 pps.

10. Dispositif permettant le balayage optique à haute résolution d'un échantillon, en particulier pour la mise en oeuvre d'un procédé selon l'une quelconque des revendications 1 à 9, l'échantillon comprenant une substance (S1) pouvant être amenée dans différents états d'énergie, état excité et état désexcité, le dispositif étant pourvu d'au moins une source de lumière permettant d'éclairer l'échantillon avec une lumière d'une longueur d'onde (3) du spectre d'excitation (1) de la substance (S1) afin de générer par endroits l'état d'énergie excité et d'éclairer l'échantillon avec une lumière d'une longueur d'onde de désexcitation (4) appropriée afin de générer l'état désexcité dans une zone marginale focale de l'excitation, et d'un dispositif de détection permettant de mettre en évidence la lumière émise par l'échantillon et résultant de la désintégration spontanée d'états d'énergie excités restants, l'échantillon comprenant au moins une autre substance (S2) pouvant être amenée dans un état d'énergie excité et dans un état d'énergie désexcité, le spectre d'excitation (5) et la longueur d'onde de désexcitation (8) différant de ceux de la première substance (S1), les étapes d'excitation et/ou de désexcitation et/ou de détection des différentes substances (S1, S2) étant exécutées séparément dans le temps lors du balayage de l'échantillon, la chronologie étant fixée en fonction de la taille des longueurs d'onde d'excitation (4, 8) respectives des substances (S1, S2), de telle manière que pour chaque étape de balayage, on démarre respectivement avec la substance (S2) présentant la plus grande longueur d'onde de désexcitation (8), une acquisition séquentielle des différentes substances (S1, S2) étant réalisée image par image ou par lots, et, pendant l'éclairage de l'échantillon avec une longueur d'onde de désexcitation (4) d'une substance (S1), la détection d'une lumière émise par une autre substance (S2), dont le spectre d'excitation (5) comprend la longueur d'onde de désexcitation (4) irradiée, étant supprimée.

11. Dispositif selon la revendication 10, **caractérisé en ce que** le dispositif de détection comprend un détecteur pourvu d'un élément dépendant d'une longueur d'onde, de préférence d'un filtre.

12. Dispositif selon la revendication 10 ou 11, **caractérisé en ce que** le dispositif de détection comprend plusieurs détecteurs.

13. Dispositif selon la revendication 11 ou 12, **caractérisé en ce que** respectivement un ou plusieurs détecteurs du dispositif de détection peuvent être associés à une substance (S1, S2).

14. Dispositif selon l'une quelconque des revendications 11 à 13, **caractérisé en ce que** les détecteurs du dispositif de détection peuvent être mis hors service individuellement et/ou par groupes.

15. Dispositif selon l'une quelconque des revendications 11 à 14, **caractérisé en ce que** des filtres d'arrêt et/ou des obturateurs peuvent être montés en amont des détecteurs du dispositif de détection.

16. Dispositif selon l'une quelconque des revendications 10 à 15, **caractérisé en ce que** la source de lumière est réalisée sous la forme d'une diode laser.

17. Dispositif selon l'une quelconque des revendications 10 à 16, **caractérisé en ce que** la source de lumière fonctionne en mode pulsé.

18. Dispositif selon l'une quelconque des revendications 10 à 17, **caractérisé en ce que** les longueurs d'onde d'excitation (3, 7) et/ou les longueurs d'onde de désexcitation (4, 8) peuvent être sélectionnées librement.

19. Dispositif selon la revendication 18, **caractérisé par** une interface logiciel permettant de choisir les longueurs d'onde d'excitation (3, 7) et/ou les longueurs d'onde de désexcitation (4, 8).
